# EUROPEAN PATENT APPLICATION

(11) **EP 0 816 838 A1**
(43) Date of publication of application: **07.01.1998**
(21) Application number: 96304678.4
(22) Date of filing: 25.06.1996
(51) Int. Cl.: G01N 27/90

(54) **Apparatus and method for well bore casing inspection**

(71) Applicant: HALLIBURTON COMPANY, Duncan Oklahoma 73536 (US)
(72) Inventor: Gardner, Clarence G., Richmond, Texas 77469 (US); Henderson, Thomas E., Katy, Texas 77450 (US)
(74) Representative: Wain, Christopher Paul

(57) **Abstract**

Apparatus (10) and method for locating and characterising flaws in a well bore casing (20) uses a transmitter and a receiver preferably in a probe (40) substantially symmetrically disposed about the outer surface of an elongated body (36). In use, the transmitters induce multiple frequency a.c. signals into, and the receivers detect signals from, the well bore casing (20) that are responsive to the a.c. signals transmitted by their associated transmitter. A signal processing means (50) processes the detected signals using both the amplitude and phase corresponding to each of the induced frequencies, and provides a first output signal that is representative primarily of the flaws on the inner surface (24) of the well bore casing (20) and a second output signal which is representative primarily of the flaws on the outer surface (26) of the casing. The signal processing means may also provide output signals which are indicative of any magnetic flux leakage in the casing and thickness of the casing.

## Description

This invention relates generally to an apparatus and method for inspection of well bore casings and, more particularly, to an apparatus and method for locating defects in the walls of casings.

In the oil and gas industry, ferromagnetic pipes or casings are installed in well bores for transporting hydrocarbons from subsurface formations to the earth's surface. The well bore casings are susceptible to damage due to corrosion and other adverse down hole conditions, which cause pittings, perforations, splitting, cracking and deformation of the casings. The exterior of the casings is generally not accessible and, therefore, it is necessary to periodically inspect the casings from the interior using non-destructive methods to determine the physical conditions of the casings. Such periodic inspections reduce emergency repairs, costly shutdowns, allow performance of preventive maintenance of the casings, and generally improve the overall efficiency of recovery of the hydrocarbons from the formations.

Various types of wireline logging tools have been used for inspecting and evaluating well bore casings. A commonly used wireline logging tool uses a combination of two sensor types, namely a magnetic-flux-leakage ("MFL") sensor and an eddy-current ("EC") sensor. In such tools, an MFL sensor and an EC sensor are juxtaposed such that each sensor has substantially the same sensing aperture. A plurality of MFL-EC sensor pairs are arranged around the well logging tool so as to cover substantially the entire inner circumference of the casing. To perform inspection of a casing, the sensor array is passed or drawn through the casing to scan substantially the entire inner surface of the casing.

In the MFL-EC sensor type tools, it is generally assumed that the MFL sensors respond to flaws present on both the inner ad outer surfaces of the casing and that the EC sensors respond substantially only to flaws on the inner surface of the casings. Any magnetic-flux-leakage indication which is not corroborated by a corresponding eddy-current indication is interpreted as being caused by a flaw on the outer surface of the casing. The eddy-current signal is, in effect, used as an inside-outside discriminator to determine the casing flaws. Such tools are deficient in two respects: first, the flaws in the well bore casings sometimes occur on both the inside and outside of the casing within the effective aperture of the sensors, which flaws would be characterised by such tools only as inner-surface flaws; and second, under some circumstances, eddy-current sensors respond to flaws on the outer surface of the casings, in which case such tools can misclassify such outer-surface flaw as inner surface flaws.

We have now devised an apparatus and method whereby the above-noted problems can be mitigated or overcome. The apparatus and method of the present invention can be used to provide signals that are primarily representative of flaws on the inside of the well bore casings and signals which are primarily representative primarily of flaws on the outside of the well bore casing. The invention also provides a sensory probe for use in the apparatus.

According to the invention, there is provided apparatus for locating and characterising defects in a hollow casing having an inside wall and an outside wall, which apparatus comprises:
(a) an elongated member adapted for suspension in and passage through the casing, the elongated member having a magnet for substantially magnetically saturating the casing when the elongated member is suspended in the casing;
(b) a transmitter coupled to the elongated member for inducing a plurality of a.c. excitation signals, each such signal having a preselected frequency, amplitude and relative phase, into the casing when said transmitter is placed near the inside wall of the casing;
(c) a receiver for detecting the induced signals from the casing when the receiver is placed near the inside wall of the casing; and
(d) a signal processing means coupled to the receiver for accepting as inputs the signals detected by the receiver and processing such signals to provide at least a first output signal which is indicative primarily of flaws on the inside wall of the casing and a second output signal which is indicative primarily of flaws on the outside wall of the casing.

The invention also incudes apparatus for locating defects in a casing having a longitudinal axis, the apparatus comprising:
(a) an elongated member adapted for suspension and passage through the casing;
(b) a plurality of spaced sensory probes coupled to ad symmetrically disposed around an outer circumference of the elongated member, preferably with means for urging the sensory probes against the inside wall of the casing, each said sensory probe having:
   (i) a transmitter coil adapted to induce into the casing a plurality of a.c. signals, each said signal having a preselected amplitude, frequency and relative phase;
   (ii) a first receiver coil and a second receiver coil associated with the transmitter coil, said first receiver coil placed at a first side of the transmitter coil and the second receiver coil placed at a second side of the transmitter coil, said first and second receiver coils being serially coupled to each other in series opposition and adapted to detect induced signals from the casing that are responsive to flaws in the casing; and wherein
   (iii) said receiver coils and the transmitter coil being wound about an axis which is parallel to the longitudinal axis of the casing, and preferably on a common core; and
(c) a signal processing means coupled to the receiver, said signal processing means accepting as inputs the signals detected by the receiver, and producing a first output signal which is indicative primarily of flaws on the inside wall of the casing and a second output signal which is indicative primarily of flaws on the outside wall of the casing.

The invention further provides a sensor element for inducing a.c. signals into a longitudinal casing having an inner curvature, the longitudinal direction of the casing defining a longitudinal axis, said sensor element comprising:
(a) a core made from a non-conductive material, said core having an outer surface having a curvature substantially matching the inner curvature of the casing, said core further having a winding axis which is parallel to the longitudinal axis of the casing;
(b) a transmitter coil wound on the core about the winding axis of the core; and
(c) a first receiver coil wound on the core about the winding axis of the core at a first side of the transmitter coil and a second receiver coil wound on the core about the winding axis and placed at a second side of the transmitter coil, said first and second receiver coils being serially coupled to each other.

This invention provides a method and an apparatus for inspecting well bore casings which utilizes a plurality of multiple frequency eddy-current probes. In one arrangement, the apparatus contains an elongated member or body having a plurality of pads placed substantially symmetrically about the outer surface of the elongated member. Each pad contains a sensor probe having a transmitter coil and a receiver comprising two coils respectively placed on either side of the transmitter coil, and connected in series opposition. At least two a.c. signals, preferably sinusoidal signals, one having a low frequency and the other a high frequency, are stored in a memory. Each transmitter coil receives the stored signals and induces corresponding signals into the well bore casing. Each receiver detects the induced signals that are responsive to flaws in the casing corresponding to its sensing aperture. A signal processor processes the detected signals by means which preserves the amplitude and relative phase of the detected signals that correspond respectively to the low and high frequencies, and which further processes the signals to provide a first output signal that is representative primarily of flaws on the inner surface of the well bore casing and a second output signal that is representative primarily of flaws on the outer surface of the well bore casing. The values of the low and high frequencies are selected in a manner that ensures that flaws on the outside of the well bore casing will generally produce a response in the receivers corresponding to both the low and high frequencies, while any flaws only on the inside of the well bore casing will generally produce a response in the receivers corresponding only to the high frequency.

In one embodiment, the method of the present invention for inspecting a well bore casing contains the steps of: inducing a relatively low frequency and a relatively high frequency a.c. signal into the well bore casing from a plurality of transmitters placed substantially symmetrically proximate to the inner circumference of the well bore casing; detecting signals from the well bore casing which are responsive to the low frequency and high frequency signals by a separate receiver associated with each of the transmitters; and processing the signals detected by the receivers by means which preserve the amplitude and relative phase of the detected signals and which further processes the signals to provide a first signal which is representative primarily of flaws on the inner surface of the well bore casing and a second signal which is representative primarily of flaws on the outer surface of the well bore casing.

In order that the invention may be more fully understood, embodiments thereof will now be described, by way of example only, with reference to the accompanying drawings, wherein:
FIG. 1 is a schematic view of one embodiment of casing inspection apparatus of the present invention, placed inside a well bore casing.
FIG. 2a is a plan view of an embodiment of a probe, having a transmitter and a receiver wound on a common core for use in the present invention.
FIG. 2b is a side view of the probe of Fig. 2a.
FIG. 2c is an end view of the probe of Fig. 2a.
FIG. 3 is a block circuit diagram of an embodiment of electronic circuitry and its interconnection with an eddy-current transmitter and receiver, for use in the present invention.
FIG. 4 is an example of a circuit diagram which may be implemented to transmit multiple-frequency current signals into the well bore casings and to process signals received from the well bore casings by the receivers of the system of Fig. 1.

### DESCRIPTION OF THE PREFERRED EMBODIMENT

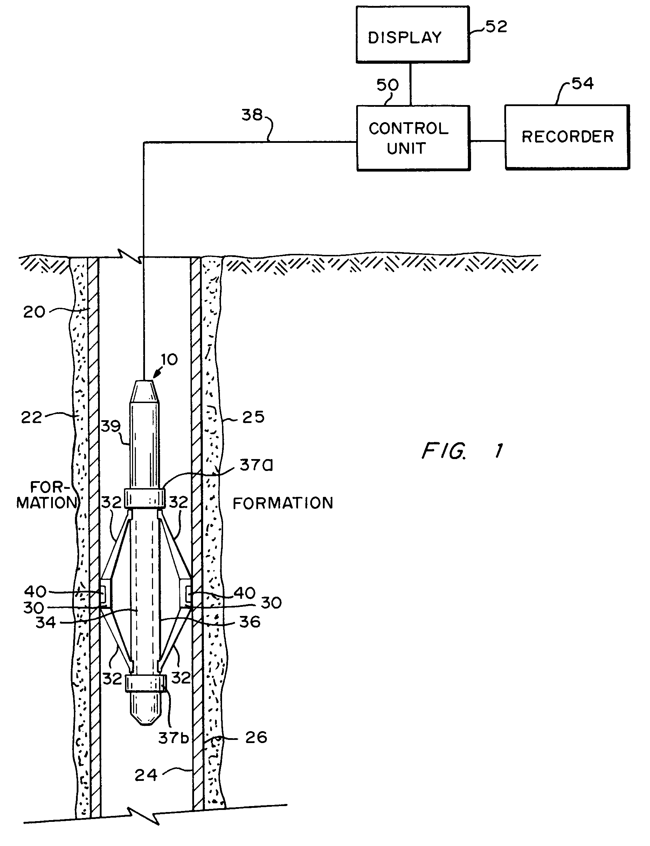

**FIG. 1** shows an inspection tool **10** disposed in a well bore casing **20** according to normal operation of the tool. Cement **22** placed between substantially the entire outside length of the casing **20** and the well bore **25** holds the well bore casing in place in the well bore. The tool **10** contains a plurality of pads **30**, each such pad coupled between a pair of suitable arms **32**, which are slidably coupled to an elongated member or body **36**. Each pad **30** is adapted to fixedly accommodate a transmitter and receiver (sensor probe) **40** in such a manner that an outer surface of the transmitter and receiver **40** faces the inner surface **24** of the casing **20**. The curvature of the outer surfaces of the pads **30** and the transmitter and receiver **40** preferably are made to substantially conform to the inner surface **24** of the casing **20**.

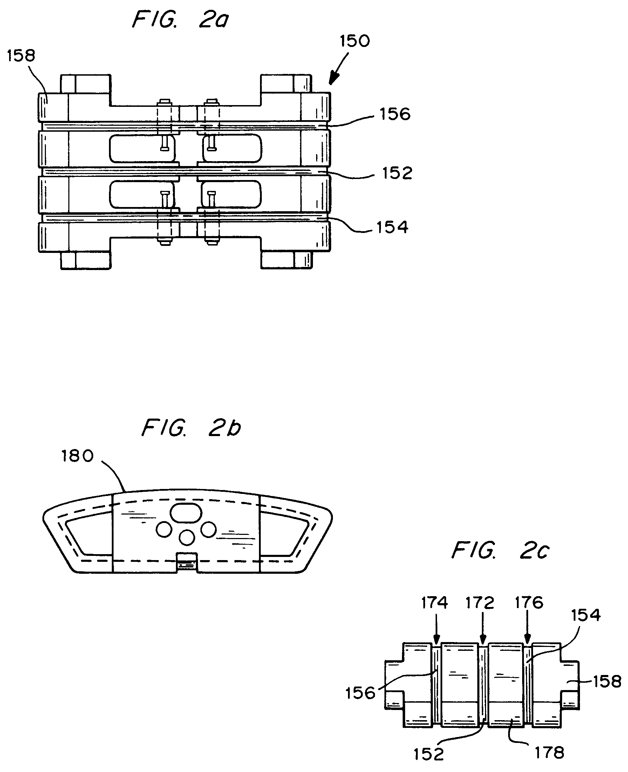

Each transmitter and receiver combination **40** is adapted to induce multiple-frequency a.c. signals into the well bore casing **20** and to receive signals from the well bore casing from a portion of the surface area (which is the sensing aperture of the transmitter and receiver coil) of the well bore casing **20**, when the transmitter and receiver coil **40** is placed proximate to the well bore casing **20**. This invention utilizes a novel transmitter and receiver coil combination, which contains one transmitter coil and two serially coupled receiver coils coupled in series opposition, all such coils wound on a common core about an axis which is parallel to the longitudinal axis of the casing. The preferred embodiment of the sensory probe **40** for use in the present invention is described in more detail later in reference to **FIGS. 2a-2c.**

The number of arms **32** and, thus, the number of transmitter and receiver coils **40**, is selected so as to provide coverage of the entire inside circumference of the well bore casing **20**. It has been determined that twelve (**12**) such sensory probes **40** provide adequate coverage of substantially the entire inner circumference of a majority of casing types currently in use in the oil and gas industry. In at least one position, the arms **32** are adapted to urge their associated pads **30** against the inner surface **24** of the casing **20**. Spring means or other means known in the art may be utilized as the urging means. Additionally, the arms **32** may be adapted to collapse against the longitudinal member **34**.

To perform casing inspection, the tool **10** is suspended in the well bore casing **20** by a wireline (cable) **38**, which contains conductors for carrying electric power from a surface equipment (not shown) to the various components of the tool **10** and conductors for transporting data and signals between the tool **10** and the control unit **50**. The control unit **50** preferably includes a computer for controlling the operation of the tool **10** and for processing any data provided by the tool **10** during inspection of the well bore casing **20**. A display means **52**, such as a monitor, is provided for displaying signals and other desired information relating to the inspection of the wellbore casing. A recorder **54** documents the desired information on a suitable medium, such as magnetic tapes. The use of computers, display means and recorders is known in the art of well logging and, thus, is not described in detail herein.

To perform inspection of the casing **20**, the tool **10**, with the arms **32** collapsed against the elongated member **36**, is lowered into the casing **20** to a desired depth. With the pads **30** urging against the inside **24** of the well bore casing **20**, the tool **10** is activated to induce multiple-frequency a.c. signals into casing **20** from each of the transmitter coils contained in the transmitter and receiver coils **40**. In the present invention, however, at least two a.c signals, one having a relatively low frequency "**f**_{**1**}" and the other a relatively high frequency "**f**_{**2**}", are continuously transmitted by each of the transmitter coils. The amplitude and frequency of the low frequency signal is selected such that it will penetrate substantially the entire casing wall thickness, whereas the amplitude and frequency of the high frequency signal is selected so that it will penetrate only partially into the casing wall. The transmitted signals induce multiple-frequency eddy currents in the casing, which are perturbed by any flaws in the casing **20**. Each receiver coil contained in each of the sensory probes **40** detects signals corresponding to such perturbations from a local area (the sensing aperture of the receiver coil). The signals detected by the receiver coils are then processed to provide signals which are representative of the characteristics of flaws in the well bore casing **20**. The processing means used and the method of processing the signals received by the various receivers is described later. To perform inspection of a desired length of the well bore casing **20**, the tool, with the pads **30** urging against the casing inside **24**, is continuously pulled uphole by methods and apparatus known in the art, to scan the desired casing length. **FIGS. 2a-2c** shows a novel sensory probe **150** for use in the present invention. In the preferred implementation, the sensory coils comprise a transmitter coil **152**, a first receiver coil **154** and a second receiver coil **156**, which are preferably wound around a common core or body **158** made of a suitable insulating material, such as plastic. The transmitter coil **152** contains a desired number of turns of a wire wound in a suitable groove **172** around the periphery of the core **158** with the wires placed below the outer surface **178** of the core. The first receiver coil **154** and the second receiver coil **156** are wound in their respective grooves **174** and **176** equidistant on opposite sides of the transmitter coil **152**. All coils are wound in a manner that will ensure that the coils remain slightly below the outer surface **178** of the core **158**. The transmitter coil **152** and the receiver coils **154** and **156** have a common winding axis **x-x**, which is parallel to the longitudinal axis of the well bore casing **20**. The two receiver coils **154** and **156** have the same number of turns of a suitable wire. The receiver coils **154** and **156** are electrically coupled in series opposition, i.e., the turns of the first receiver coil **154** are wound in a direction opposite to that of the second receiver coil **156**. The direct mutual inductance of such a transmitter and receiver coil winding arrangement is substantially zero. The outer surface **180** of the core **158** has a curvature which is made to substantially conform to the inside curvature of the well bore casing **20**. As noted earlier, it has been determined that twelve sensory probes placed equidistant around the circumference of the elongated member **34** (see **FIG. 1**) will provide adequate coverage of substantially the entire inner circumference of most well bore casings.

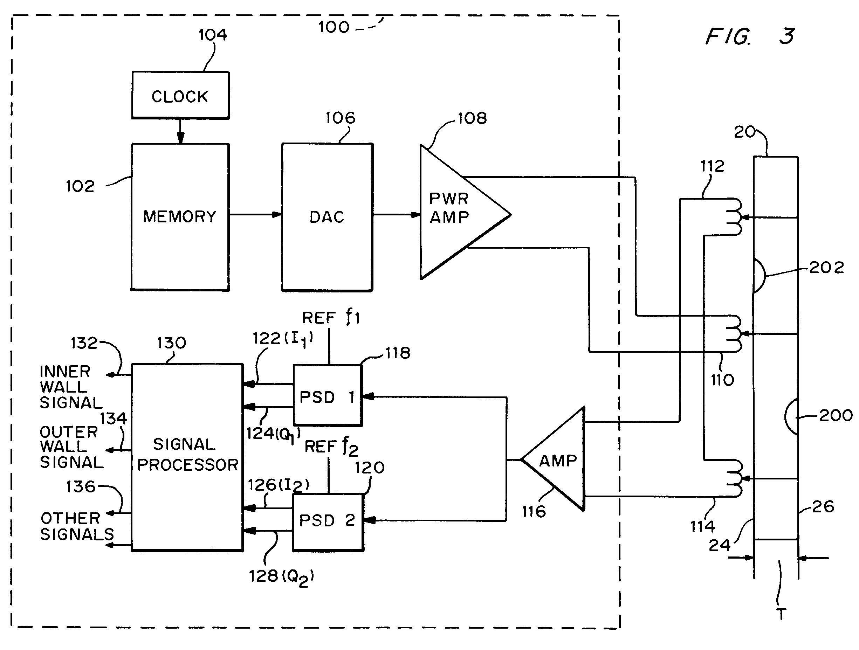

**FIG. 3** shows a block circuit diagram of the electronic circuitry **100** for use in the present invention and its interconnection with a transmitter and receiver **40** placed proximate to the well bore casing **20**. The electronic circuitry **100** is coupled to each of the transmitters and receivers in the tool **10** and is preferably placed in the cartridge **39** (see **FIG. 1**). For convenience and not as a limitation, the block circuit diagram of **FIG. 3** shows the use of two a.c. signals: however, multiple-frequency signals may be used in the apparatus and method of the present invention.

Still referring to **FIG. 3**, a digitally sampled waveform comprising the superposition of two sinusoidal waveforms is preferably stored in a non-volatile memory **102**, which may be implemented in the form of a read only memory ("**ROM**") or an erasable programmable read only memory ("**EPROM**"), each such waveform having a preselected relative amplitude and frequency. The high frequency **f**₂ is conveniently made an integer multiple of the low frequency **f**₁. For the purpose of this invention a low frequency **f**₁ of **2 KHZ** and a high frequency **f**₂ of **8 KHZ** preferably are used. A clock **104** coupled to the memory **102** causes the stored waveforms to be read out into a digital-to-analog converter ("**DAC**") **106**, whose output is fed to a power amplifier ("**PWR AMP**") **108**. Alternating current from the power amplifier **108** is circulated through a transmitter coil **110**, which is placed in close proximity to the inner wall **24** of the well bore casing **20**. Disposed on one side of the transmitter coil **110** is a positive receiver coil **112** and disposed on the other side of the transmitter coil **110** is a negative receiver coil **114**. The geometries and windings of the transmitter coil **110** and the receiver coils **112** and **114** are selected in a manner which ensures that the mutual inductance of the coils is substantially zero when there is no flaw present in the well bore casing **20**. The method for determining the number of coil turns to obtain the desired zero mutual inductance is known in the art and, thus, is not explained in detail herein.

During operation, the electro-magnet **34** (see **Fig. 1**) substantially magnetically saturates the casing and each transmitter coil **110** continuously induces the two a.c. signals stored in the non-volatile memory **102** into the casing over a portion of the casing **20**, which produce eddy-currents having frequencies **f**₁ and **f**₂. As noted earlier, the amplitude and frequency of the low frequency signal **f**₁ is selected such that it will penetrate substantially the entire well bore casing wall thickness "**T**", whereas the amplitude and frequency of the high frequency signal **f**₂ is selected so that it will penetrate only partially into the well bore casing wall. The eddy currents induced in the well bore casing **20** are perturbed by flaws, such as an inner casing flaw **20**ᵢ and an outer casing flaw **20**ₒ. The receiver coils **112** and **114** detect current signals at each of the frequencies that correspond to the eddy-current perturbations in the well bore casing **20**, which are fed into a signal amplifier **116**.

The output of the signal amplifier **116** is fed into (a) a relatively low band-pass (not shown) filter to obtain an **MFL** signal which is indicative of the magnetic flux leakage on the casing and (b) into a relatively high band-pass filter (not shown) to isolate signals containing the eddy current signals, which are then fed in parallel to a low frequency phase selective detector **118** and a high frequency phase selective detector **120**. A low frequency reference signal "**REF f**₁" is supplied to the phase selective detector **118** and a high frequency reference signal "**REF f**₂" is supplied to the phase selective detector **120**. Reference signals "**REF f**₁" and "**REF f**₂" are preferably derived from clock **104** by known means in the art. The phase selective detectors **118** and **120** are designed to preserve either the amplitude and phase or equivalently an in-phase signal amplitude and a quadrature signal amplitude of received signals corresponding respectively to their reference frequencies **f**₁ and **f**₂.

Each of the phase selective detectors **118** and **120** respectively preferably provides two outputs, an in-phase signal and a quadrature signal, which are respectively labeled as **122** (**I**₁) and **124** (**Q**₁) for the phase selective detector **118** and as **126** (**I**₂) and **128** (**Q**₂)for the phase selective detector **120**. The outputs **122** (**I**₁) and **124** (**Q**₁) from the phase selective detector **118** and outputs **126** (**I**₂) and **128** (**Q**₂) from the phase selective detector **120** are fed into a signal processor **130** to produce a first output signal **132** (the "inner wall signal"), which is representative primarily of the presence of flaws on the inner wall **24** of the well bore casing **20** and a second output signal **134** (the "outer wall signal"), which is representative primarily of the presence of flaws on the outer wall **26** of the well bore casing **20**. The **MFL** signal and the first and second output signals also may be utilized to determine the nature of the flaw in the casing.

The preservation of the amplitude and phase or equivalently the in-phase amplitude and the quadrature amplitude of signals, as discussed earlier, enables the signal processor to **130** to distinguish between casing flaws that are respectively on the inner and outer surface of the well bore casing **20**. It also enables the signal processor **130** to reconstruct an approximate size and depth of such flaws and to compensate for the effects of variable magnetic permeability and/or electrical conductivity of the casing. Due to the preservation of the relative amplitude and phase of the signals, the signal processor **130** may also be adapted to process signals **122**, **124**, **126**, and **128** to provide additional signals which are representative or indicative of certain other physical conditions of the well bore casing **20**, such as the magnetic permeability of the well bore casing **20** and the casing wall thickness **T**.

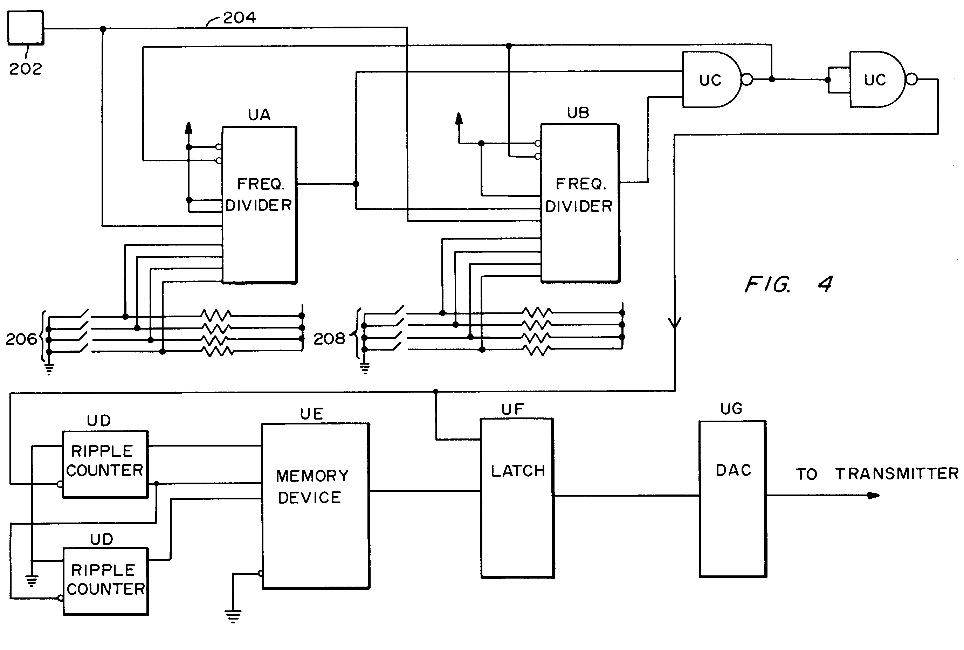

**FIG. 4** shows a detailed circuit diagram for generating multiple frequency a.c. signals for use in the present invention. Output from a crystal oscillator **202** is input to a pair of frequency dividing circuits **UA** and **UB** via a clock line **204**. The desired low frequency signal **f**₁ and high frequency signal **f**₂ are obtained by appropriately selecting dip witches **206** and **208** respectively coupled to the input lines **206** of **UA** and lines **208** of **UB**. The outputs from the circuits **UA** and **UB** are applied via a pair of "**NAND**" gates **UC** to a ripple counter **UD**, whose outputs are used as address line inputs to an **EPROM UE**, which is adapted to store multiple- frequency sinusoidal, the frequencies of the sinusoidal being made integer multiples of each other. For example, if two frequencies are used, the high frequency **f**₂ will be an integer multiple, such as eight (**8**), of the low frequency **f**₁. The output form the memory **UE** is latched in the latch **UF**. The latched signal is fed to a digital-to-analog converter (**DAC**) **UF**, whose output is then used to drive the transmitter coil via a desired amplifier.

Thus, the present invention provides apparatus and method for performing inspection of well bore casings, which contains a plurality of transmitter and receiver coil combinations, each such combination wound on a common core and adapted to induce multiple frequency a.c. signals from each such transmitter into the well bore casing. The receivers detect eddy current signals which are representative of perturbations caused by flaws in the well bore casing. The detected signals are processed by preserving the relative phase and amplitude of the detected signals to provide information about the location and characteristics of the flaws in the well bore casing. The system of the present invention preferably utilizes a sensory probe, wherein a receiver coil is placed on either side Of a transmitter coil and wherein all coils are wound on a common core about a common axis that is parallel to the longitudinal axis of the well bore casing.

The foregoing description is directed to particular embodiments of the present invention for the purpose of illustration and explanation. It will be apparent, however, to one skilled in the art that many modifications and changes to the embodiment set forth above are possible.

## Claims

1. Apparatus (10) for locating and characterising defects in a hollow casing (20) having an inside wall (24) and an outside wall (26), which apparatus comprises:
(a) an elongated member (36) adapted for suspension in and passage through the casing (20), the elongated member having a magnet (34) for substantially magnetically saturating the casing when the elongated member is suspended in the casing;
(b) a transmitter (152) coupled to the elongated member (36) for inducing a plurality of a.c. excitation signals, each such signal having a preselected frequency, amplitude and relative phase, into the casing (20) when said transmitter is placed near the inside wall (24) of the casing;
(c) a receiver (154,156) for detecting the induced signals from the casing (20) when the receiver is placed near the inside wall (24) of the casing; and
(d) a signal processing means (130) coupled to the receiver (154,156) for accepting as inputs the signals detected by the receiver ad processing such signals to provide at least a first output signal which is indicative primarily of flaws on the inside wall (24) of the casing (20) and a second output signal which is indicative primarily of flaws on the outside wall (26) of the casing.

2. Apparatus according to claim 1, wherein the longitudinal direction of the elongated member (36) defines a longitudinal axis and the transmitter (152) and receiver (154,156) each contains coils wound about a common axis which is parallel to the longitudinal axis.

3. Apparatus for locating defects in a casing (20) having a longitudinal axis, the apparatus comprising:
(a) an elongated member ( 36) adapted for suspension and passage through the casing (20);
(b) a plurality (preferably 12) of spaced sensory probes (40) coupled to and symmetrically disposed around an outer circumference of the elongated member (36), preferably with means for urging the sensory probes against the inside wall (24) of the casing (20), each said sensory probe having:
(i) a transmitter coil (152) adapted to induce into the casing (20) a plurality of a.c. signals, each said signal having a preselected amplitude, frequency and relative phase;
(ii) a first receiver coil (154) and a second receiver coil (156) associated with the transmitter coil (152), said first receiver coil (154) placed at a first side of the transmitter coil and the second receiver coil (156) placed at a second side of the transmitter coil, said first and second receiver coils being serially coupled to each other in series opposition and adapted to detect induced signals from the casing (20) that are responsive to flaws in the casing; and wherein
(iii) said receiver coils (154,156) ad the transmitter coil (152) being wound about an axis which is parallel to the longitudinal axis of the casing (20), and preferably on a common core; and
(c) a signal processing means (130) coupled to the receiver (154,156), said signal processing means accepting as inputs the signals detected by the receiver, and producing a first output signal which is indicative primarily of flaws on the inside wall (24) of the casing and a second output signal which is indicative primarily of flaws on the outside wall (26) of the casing.

4. Apparatus according to claim 1,2 or 3, further having:
(i) a non-volatile memory, (preferably an erasable-programmable-read-only memory) for storing said plurality of a.c. signals; and/or
(ii) circuitry for providing the stored signals to the transmitter.

5. Apparatus according to claim 1,2,3 or 4, which is arranged such that the plurality of a.c. excitation signals contains at least two signals, one having a relatively low frequency and the other a relatively high frequency.

6. Apparatus according to any of claims 1 to 5, wherein the signal processing means (130) is arranged to receive the signals detected by the receivers (154,156) and in response thereto to process the received signals by preserving the amplitude and relative phase thereof corresponding to each of the a.c. signal frequencies.

7. A method of detecting flaws in a casing (20) having an inside (24) and an outside (26), said method comprising the steps of:
(a) inducing an a.c. signal having a plurality of preselected frequencies into the casing (20);
(b) detecting the induced signals from the casing which are responsive to flaws in the casing; and
(c) processing the detected signals by preserving amplitude and relative phase of the detected signals which correspond to signals having the preselected frequencies to provide a signal having the preselected frequencies to provide a signal which distinguish between flaws on the inside (24) and outside (26) of the casing (20).

8. A method according to claim 7, wherein processing of the detected signals also provides a signal which is indicative of the thickness of the casing, and/or indicative of any magnetic flux leakage in the casing.

9. A method according to claim 7 or 8, wherein the plurality of preselected frequencies contains two frequencies, one a relatively low frequency and the other a relatively high frequency.

10. A method of detecting flaws in a well bore casing wherein there is used an apparatus as claimed in any of claims 1 to 6.

11. A sensor element (150) for inducing a.c. signals into a longitudinal casing having an inner curvature, the longitudinal direction of the casing defining a longitudinal axis, said sensor element (150) comprising:
(a) a core (158) made from a non-conductive material, said core having an outer surface (180) having a curvature substantially matching the inner curvature of the casing, said core further having a winding axis which is parallel to the longitudinal axis of the casing;
(b) a transmitter coil (152) wound on the core (158) about the winding axis of the core; and
(c) a first receiver coil (154) wound on the core about the winding axis of the core at a first side of the transmitter coil (152) and a second receiving coil (156) wound on the core about the winding axis and placed at a second side of the transmitter coil (152), said first and second receiver coils being serially coupled to each other.
